**Europäisches Patentamt**

**European Patent Office**

**Office européen des brevets**

(19)

(11) Veröffentlichungsnummer: **0 254 205**

**A2**

(12) # EUROPÄISCHE PATENTANMELDUNG

(21) Anmeldenummer: **87110262.0**

(22) Anmeldetag: **16.07.87**

(51) Int. Cl.⁴: **C08J 7/18 , G02B 1/10 ,
B05D 7/24 , C09D 3/82**

(30) Priorität: **19.07.86 DE 3624467**

(43) Veröffentlichungstag der Anmeldung:
**27.01.88 Patentblatt 88/04**

(84) Benannte Vertragsstaaten:
**AT BE CH DE ES FR GB IT LI NL**

(71) Anmelder: **Leybold-Heraeus GmbH
Bonner Strasse 498 Postfach 51 07 60
D-5000 Köln 51(DE)**

(72) Erfinder: **Enke, Dr. Knut
Am Wingert 19
D-8752 Johannesberg(DE)**
Erfinder: **Zültzke, Walter
Kilianstädter Strasse
D-6450 Hanau-Wachenbuchen(DE)**

(74) Vertreter: **Zapfe, Hans, Dipl.-Ing.
Seestrasse 2 Postfach 30 04 08
D-6054 Rodgau-3(DE)**

(54) **Verfahren zum Herstellen transparenter Schutzschichten aus Siliziumverbindungen.**

(57) Verfahren zum Herstellen transparenter Schutzschichten, insbesondere auf optischen Kunststoff-Substraten. Durch chemische Dampfabscheidung unter Plasmaeinwirkung (Plasma-CVD) auf eine polymerisierbare monomere organische Verbindung aus der Gruppe der Siloxane und Silazane wird Schichtmaterial abgeschieden, wobei dem Polymerisationsvorgang Sauerstoff im Überschuß zugeführt wird. Zur Lösung der Aufgabe, Haftfestigkeit und Schichthärte ohne aufwendige Verfahrensführung weiter zu verbessern, werden folgende Verfahrensschritte vorgeschlagen:

a) das Plasma wird mittels Hochfrequenz zwischen zwei Elektroden erzeugt, von denen die eine eine Katodenfunktion ausübt,

b) die Substrate werden auf der Elektrode mit Katodenfunktion angeordnet, und die zugeführte elektrische Leistung wird so hoch eingestellt, daß die Biasspannung an den Substraten mindestens -80 Volt beträgt, und

c) der Partialdruck des Sauerstoffs wird mindestens fünf Mal so hoch gewählt, wie der Partialdruck der organischen Verbindung aus der Gruppe der Siloxane und Silazane.

## " Verfahren zum Herstellen transparenter Schutzschichten aus Siliziumverbindungen "

Die Erfindung betrifft ein Verfahren zum Herstellen transparenter Schutz-Schichten, insbesondere auf optischen Kunststoff-Substraten, durch chemische Dampfabscheidung unter Plasma-Einwirkung (Plasma-CVD) auf eine polymerisierbare monomere organische Verbindung aus der Gruppe der Siloxane und Silazane, wobei dem Polymerisationsvorgang Sauerstoff im Überschuß zugeführt wird.

Durch die DE-OS 34 13 019 ist eine Verfahren der vorstehend beschriebenen Gattung bekannt. Diese Schrift schweigt sich jedoch völlig über die Potentialverhältnisse an den Substraten während der Beschichtung aus, und es wird zwecks Erhöhung der Schichthärte empfohlen, beim Beschichtungsprozeß Substanzen wie Sauerstoff zuzusetzen, die die Schichthärte erhöhen sollen. Um hierbei jedoch eine ausreichende Haftfestigkeit zu erzielen, wird weiterhin vorgeschrieben, daß die die Schichthärte erhöhenden Substanzen gegenüber dem Beginn des Polymerisationsprozesses verzögert zugegeben werden. Ein anfänglicher Sauerstoffunterschuß führt jedoch zu bräunlichen Schichten. Der Erfindung liegt die Aufgabe zugrunde, Haftfestigkeit und Schichthärte weiter zu verbessern bzw. zu vergrößern, ohne die Verfahrensführung aufwendiger zu gestalten und bräunliche Schichten in Kauf zu nehmen.

Die Lösung der gestellten Aufgabe erfolgt bei dem eingangs beschriebenen Verfahren erfindungsgemäß dadurch, daß

a) das Plasma mittels Hochfrequenz zwischen zwei Elektroden erzeugt wird, von denen die eine eine Katodenfunktion ausübt,

b) die Substrate auf der Elektrode mit Katodenfunktion angeordnet werden und daß die zugeführte elektrische Leistung so hoch eingestellt wird, daß die Biasspannung an den Substraten mindestens -80 Volt beträgt und daß

c) der Partialdruck des Sauerstoffs mindestens 5 Mal so hoch gewählt wird wie der Partialdruck der organischen Verbindung aus der Gruppe der Siloxane und Silazane.

Die beiden Elektroden können dabei durch die Reaktionskammer einerseits und einen darin untergebrachten Substrathalter andererseits gebildet werden, wobei der Substrathalter über eine Kapazität und ein Impedanz-Anpassungsnetzwerk mit einem Hochfrequenzgenerator verbunden ist. Aufgrund der Flächenverhältnisse zwischen dem notwendigerweise kleineren Substrathalter und der diesen umschliessenden Vakuumkammer stellt sich an dem Substrathalter eine negative Vorspannung ein, so daß dieser eine Katodenfunktion erhält. Durch diese Vorspannung, die der Hochfrequenzspannung überlagert ist, werden aus dem Plasma positive Ionen herausgezogen und in Richtung auf die Katode beschleunigt. Dadurch scheiden sich auf den Substraten feste und dichte Schichten ab, die durch das zusätzliche Ionenbombardement in der Regel äußerst hart sind.

Im Zusammenhang damit ist die Zusammensetzung der dem Beschichtungsprozeß zugeführten Gase bzw. Gasgemische von erheblicher Bedeutung. Ohne Anwendung der erfindungsgemäßen Maßnahmen entstehen bei Schichtdicken oberhalb von etwa 0,5 bis 2 $\mu$m braune Schichten, die für optische Anwendungen unbrauchbar sind, da sie im blauen und violetten Teil des sichtbaren Spektrums stark absorbieren.

Es hat sich insbesondere gezeigt, daß die erfindungsgemäß hergestellten Schichten auf dem für Kunststoff-Brillengläser üblicherweise verwendeten CR 39 ausgezeichnet haften und den üblichen Radiergummi-Kratztest spielend überstehen.

Es ist dabei besonders vorteilhaft, als Siloxan Hexamethyldisiloxan zu verwenden, das einen relativ hohen Dampfdruck hat. Mit diesen Monomeren liessen sich in Verbindung mit den übrigen Verfahrensparametern, d.h. mit einem Sauerstoffüberschuß, im sichtbaren Bereich des Spektrums völlig transparente Schichten herstellen, die eine außerordentlich hohe Mikrohärte von $HV_{0,01}$ = 1000 Kp/mm$^2$ aufwiesen. Dieser Wert ist im Vergleich zu Quarz zu sehen, das eine Härte von 600 bis 750 Kp/mm$^2$ besitzt.

Es ist dabei gemäß der weiteren Erfindung besonders vorteilhaft, wenn die Biasspannung durch Wahl der zugeführten Leistung auf Werte zwischen -80 und -600 V eingestellt wird.

Bei Verwendung von Hexamethyldisiloxan und einer Biasspannung von etwa -200 V betrug die Beschichtungsrate etwa 18 $\mu$m pro Stunde bzw. 5,0 nm/s. Dieser Wert stellt einen Mittelwert dar; höhere Beschichtungsraten sind durch eine Druckerhöhung und/oder eine Erhöhung der Biasspannung erreichbar.

Vorzugsweise wird der Polymerisationsvorgang im Druckbereich zwischen $10^{-3}$ und 10 mbar durchgeführt.

Der Brechungsindex der hergestellten quarzähnlichen Schichten liegt in der Nähe von dem des Quarzes und kann durch die Beeinflussung der Prozeßparameter geringfügig größer oder kleiner gemacht werden.

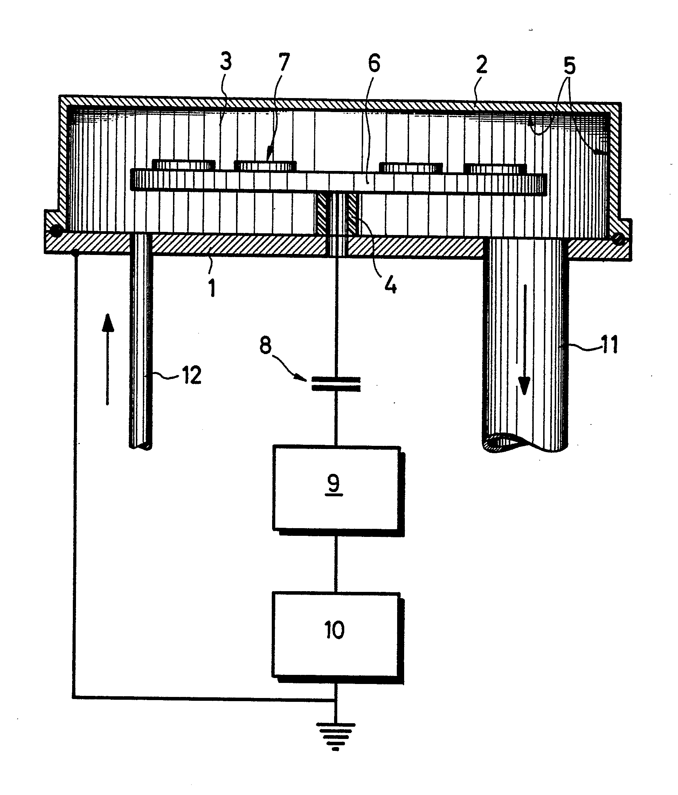

Ein Ausführungsbeispiel einer Vorrichtung zur Durchführung des erfindungsgemäßen Verfahrens wird nachfolgend anhand der einzigen Figur näher erläutert, die einen vertikalen Radialschnitt durch eine chargenweise zu betreibende Vorrichtung zeigt.

In der Figur ist eine aus Metall bestehende Grundplatte 1 dargestellt, über der durch eine vakuumdicht aufgesetzte Glocke 2 eine Reaktionskammer 3 (Vakuumkammer) gebildet wird. Die Wandflächen der Reaktionskammer 3 bilden eine erste Elektrode 5, die an Massepotential liegt. Eine zweite Elektrode 6, die im vorliegenden Falle den Substrathalter für eine Reihe von Substraten 7 bildet, stützt sich über einen Isolator 4 auf der Grundplatte 1 ab. Von der zweiten Elektrode 6 führt eine Leitung zu einer Kapazität 8 und von dort zu einem Impedanzanpassungsnetzwerk 9, das seinerseits wieder mit einem Hochfrequenzgenerator 10 verbunden ist, der eine Ausgangsfrequenz zwischen 100 kHz und 100 MHz aufweisen kann. Durch die vorgegebenen Flächenverhältnisse liegt an der zweiten Elektrode 6 stets eine negative Biasspannung an, d.h. d.e auf ihr abgelegten Substrate 7 liegen auf Katodenpotential.

Die Reaktionskammer 3 wird über einen Saugstutzen 11 evakuiert und über eine Gaszuleitung 12 mit einem Gemisch aus den für die Beschichtung benötigten Reaktionsgasen versorgt.

### Beispiel 1:

Eine Beschichtungsanlage nach der Figur wurde zunächst bis auf einen Druck von $5 \times 10^{-5}$ mbar evakuiert. Dann wurde über ein Dosierventil und die Gaszuleitung 12 Argon eingeleitet und ein Gasdruck von $10^{-2}$ mbar eingestellt. Durch Anlegen einer Hochfrequenzspannung von 13,56 MHz an die zweite Elektrode wurde eine Glimmentladung gezündet und die Biasspannung auf -450 V eingestellt ("Sputterätzen"). Nach 10 Minuten wurde über weitere nicht gezeigte Dosierventile Gemisch aus Hexamethyldisiloxan (HMDS) und Sauerstoff eingeleitet und die Argonzufuhr abgeschaltet. Dabei betrug der Partialdruck jeweils $10^{-2}$ mbar. Das Mischungsverhältnis der beiden Reaktionsgase blieb von Anfang an unverändert. Die Biasspannung wurde durch Einstellung des Hochfrequenzgenerators auf -450 V eingestellt. Während einer Beschichtungsdauer von 40 Minuten wurde eine 2,5 $\mu$m dicke braune Schicht abgeschieden, deren Mikrohärte etwa 1200 Kp/mm$^2$ (Vickers) betrug.

### Beispiel 2:

In einem weiteren Beschichtungsverfahren wurden die Partialdrücke zu $10^{-2}$ mbar für HMDS und $2 \times 10^{-2}$ mbar für $O_2$ eingestellt und die Katodenspannung zu -500 V gewählt. Nach einer Beschichtungsdauer von 32 Minuten wurde eine gelbe Schicht mit einer Dicke von 5,8 $\mu$m und einer Mikrohärte von 1000 Kp/mm$^2$ erhalten.

### Beispiel 3:

In einem weiteren Versuch wurden die Partialdrücke zu $0,8 \times 10^{-2}$ mbar für HMDS und zu $3 \times 10^{-2}$ mbar für $O_2$ eingestellt und die Katodenspannung gleichfalls zu -500 V gewählt. Bei diesen Parametern erhielt man nach einer Beschichtungsdauer von 20 Minuten eine 3,8 $\mu$m dicke hellgelbe Schicht mit einer Mikrohärte von 1000 Kp/mm$^2$.

### Beispiel 4:

In einem weiteren Beschichtungsversuch wurde der Sauerstoffüberschuß weiter gesteigert. Mit Partialdrücken von $0,8 \times 10^{-2}$ mbar für HMDS und $4 \times 10^{-2}$ mbar für $O_2$ und der gleichen Katodenspannung von -500 V wurden nach 12 Minuten eine 2,8 $\mu$m dicke transparente, farblose Schicht mit einer Mikrohärte von 1000 Kp/mm$^2$ erhalten.

### Beispiel 5:

Mit den Verfahrensparametern nach Beispiel 4 wurden Kunststoffplatten aus CR 39 mit einer Dicke von 1 mm beschichtet. Nach der Beschichtung wiesen die Platten eine geringfügige Wölbung auf. Eine Beschichtung der gegenüberliegenden Seite dieser Platten machte die Wölbung rückgängig.

### Beispiel 6:

Der Beschichtungsversuch nach Beispiel 5 wurde wiederholt, jedoch mit dem Unterschied, daß die Katodenspannung auf -100 V herabgesetzt wurde. Hierbei unterblieb die ursprünglich beobachtete Verbiegung. Die Mikrohärte solcher Schichten sank auf den Wert von 750 Kp/mm$^2$ ab, der jedoch der Härte von reinem Quarz ähnlich und daher ausreichend ist, um den Kunststoff CR 39 so kratzfest zu machen, wie es für Brillengläser aus diesem Material erforderlich ist. Die Schichteigenschaften sind dabei aufgedampften Quarzschichten bei weitem überlegen.

Beispiel 7:

Eine Beschichtungsanlage nach der Figur wurde zunächst bis auf einen Druck von $5 \times 10^{-5}$ mbar evakuiert. Dann wurde nach dem im Beispiel 1 beschriebenen Sputterätzschritt über Dosierventile und die Gaszuleitung 12 von Anfang an ein Gasgemisch aus Hexamethyldisilazan und Sauerstoff eingeleitet, wobei die Partialdrücke $10^{-2}$ mbar für Hexamethyldisilazan und $5 \times 10^{-2}$ mbar für $O_2$ betrugen. Durch Anlegen einer Hochfrequenzspannung mit einer Frequenz von 13,65 MHz an die zweite Elektrode wurde eine Glimmentladung gezündet, und die Biasspannung wurde durch Einstellung des Hochfrequenzgenerators auf -400 V eingestellt. Während einer Beschichtungsdauer von 15 Minuten wurde eine 1,8 μm dicke transparente farblose Schicht abgeschieden, deren Mikrohärte etwa 1000 Kp/mm² (Vickers) betrug.

**Ansprüche**

1. Verfahren zum Herstellen transparenter Schutzschichten, insbesondere auf optischen Kunststoff-Substraten, durch chemische Dampfabscheidung unter Plasmaeinwirkung (Plasma-CVD) auf eine polymerisierbare monomere organische Verbindung aus der Gruppe der Siloxane und Silazane, wobei dem Polymerisationsvorgang Sauerstoff im Überschuß zugeführt wird, <u>dadurch gekennzeichnet, daß</u>

a) das Plasma mittels Hochfrequenz zwischen zwei Elektroden erzeugt wird, von denen die eine eine Katodenfunktion ausübt,

b) die Substrate auf der Elektrode mit Katodenfunktion angeordnet werden und daß die zugeführte elektrische Leistung so hoch eingestellt wird, daß die Biasspannung an den Substraten mindestens -80 Volt beträgt und daß

c) der Partialdruck des Sauerstoffs mindestens fünf Mal so hoch gewählt wird wie der Partialdruck der organischen Verbindung aus der Gruppe der Siloxane und Silazane.

2. Verfahren nach Anspruch 1, <u>dadurch gekennzeichnet</u>, daß als Siloxan Hexamethyldisiloxan (HMDS = (CH₃)₃ -Si-0-Si (CH₃)₃) verwendet wird.

3. Verfahren nach Anspruch 1, <u>dadurch gekennzeichnet</u>, daß die Biasspannung zu -80 bis -600 V durch Wahl der zugeführten Leistung eingestellt wird.

4. Verfahren nach Anspruch 1, <u>dadurch gekennzeichnet</u>, daß der Polymerisationsvorgang im Druckbereich zwischen $10^{-3}$ und 10 mbar durchgeführt wird.